# EUROPEAN PATENT SPECIFICATION

(11) **EP 3 821 970 B1**
(45) Date of publication and mention of the grant of the patent: **26.07.2023**
(21) Application number: 19834749.4
(22) Date of filing: 28.02.2019
(51) Int. Cl.: B01F 23/10, B01F 25/41, B01F 25/313, B01D 53/76, B01D 53/56

(54) **COMBINED FLUE OZONE DISTRIBUTION SYSTEM**
KOMBINIERTES RAUCHGAS-OZON-VERTEILUNGSSYSTEM
SYSTÈME DE DISTRIBUTION D'OZONE COMBINÉ POUR CARNEAU

(30) Priority: 12.07.2018 CN 201810763514
(43) Date of publication of application: 19.05.2021
(73) Proprietor: INSTITUTE OF PROCESS ENGINEERING, CHINESE ACADEMY OF SCIENCES, Haidian District Beijing 100190 (CN); HBIS Group Co., Ltd., Shijiazhuang, Hebei 050023 (CN)
(72) Inventor: ZHU, Tingyu, Beijing 100190 (CN); WANG, Xindong, Beijing 100190 (CN); XU, Wenqing, Beijing 100190 (CN); YE, Meng, Beijing 100190 (CN); ZHAO, Ruizhuang, Beijing 100190 (CN); JIANG, Zichao, Beijing 100190 (CN); WAN, Bin, Beijing 100190 (CN)
(74) Representative: Prinz & Partner mbB
(86) International application number: PCT/CN2019/076412
(87) International publication number: WO 2020/010851

(56) References cited:
- CN-A- 103 816 784
- CN-A- 103 877 837
- CN-A- 107 774 109
- CN-U- 203 577 599
- CN-U- 205 392 142
- CN-U- 206 549 439
- CN-U- 207 356 882

## Description

This application claims priority to Chinese Patent Application No. 201810763514.0 titled "Combined Flue Ozone Distribution System" filed Jul. 12, 2018.

### TECHNICAL FIELD

The present application relates to the technical field of environmental engineering, for example, specially to a combined flue ozone distribution system1.

### BACKGROUND

NO, which accounts for more than 90% of NOx in flue gas, is hard to remove because NO is quite insoluble in water, while NO₂ and SO₂ have similar properties, and NO₂ and SO₂ are both acid gas and are freely soluble in water, which means that NO₂ and SO₂ can be easily removed by reacting with alkaline substances. Therefore, for the purpose of denitration, it is necessary to first oxidize NO to NO₂ and then remove it.

Many different technologies have been developed for NO oxidation removal, among which the low-temperature ozone oxidation and denitration technology refers to injecting O₃ into flue before the flue gas enters the purification device to oxidize NO to NO₂, and then the gas enters the subsequent absorption section. The patent with the application number CN201610272778.7 discloses an ozone low-temperature oxidation and denitration process and system. The technical solution is to install an ozone generator in the flue, spray ozone into the flue through an ozone distributor, and then send the mixture of ozone and flue gas into scrubbing tower to remove nitrogen oxides. The patent with the application number CN201610202410.3 discloses an ammonia oxidation and denitration process and reaction apparatus. In this technical solution, ozone oxidation and hydrogen peroxide oxidation of flue gas are combined in an orderly manner, and the ozone-oxidized flue gas is further absorbed by alkalescent absorption solution, and absorb the hydrogen peroxide-reoxidized flue gas by acidulous absorption solution, thereby eliminating the emission and pollution of nitrogen oxides. It can be seen from the published patent reports that using Os to oxidize NO in a gas phase is an effective oxidation technology.

However, it should be noted that Os is very unstable, and it decomposes slowly at room temperature and decomposes rapidly at 200°C. Thus, the dispersion effect of Os and the effect of contact between Os and NO in a flue directly determine the oxidation efficiency and subsequent absorption effect of NO, and therefore the mixing effect of the two gases has become the focus of development of low-temperature ozone oxidation and denitration technology. Accordingly, the development of ozone distributors which affect gas flow distribution in the flue has becomes hot spot.

Document CN 107 774 109 A discloses an apparatus in accordance with the preamble of claim 1.

### SUMMARY

The present application provides a combined flue ozone distribution system, which has the advantages such as good distribution effect, stronger working condition adaptability, and greater operation flexibility.

A combined flue ozone distribution system includes a first ozone distributor and a second ozone distributor that are disposed in a flue. The first ozone distributor and the second ozone distributor each includes a plurality of main distribution pipes, a plurality of branch distribution pipes, and connecting pipes configured to supply ozone. Both sides of each main distribution pipe are each provided with a branch distribution pipe. The first end of one main distribution pipe (4) is communicated with a connecting pipe, and the second end of the one main distribution pipe (4) is communicated with a branch distribution pipe. The first ozone distributor also includes hemispherical distributors, and one hemispherical distributor is disposed at an end of one branch distribution pipe of the first ozone distributor. The second ozone distributor further includes rhombic guide plates, and one rhombic guide plate is disposed at an end of the one branch distribution pipe of the second ozone distributor.

### BRIEF DESCRIPTION OF DRAWINGS

FIG. 1 is a front view of a first ozone distributor according to an embodiment of the present application.
FIG. 2 is a front view of a second ozone distributor according to an embodiment of the present application.
FIG. 3 is a schematic view illustrating the structure of a hemispherical distributor of a first ozone distributor according to an embodiment of the present application.
FIG. 4 is a schematic view illustrating the structure of a rhombic guide plate of a second ozone distributor according to an embodiment of the present application.

### Reference list

- 100: first ozone distributor
- 200: second ozone distributor
- 300: flow regulating valve
- 1: flue
- 2: connecting pipe
- 3: flange
- 4: main distribution pipe
- 5: branch distribution pipe
- 6: hemispherical distributor
- 7: rhombic guide plate
- 10: via

### DETAILED DESCRIPTION

The main function of ozone distributor in flue is to improve the mixing uniformity of ozone and flue gas injected into the flue and to improve the oxidation efficiency of NO in the flue gas by ozone, so that NO is oxidized to NO₂ to the greatest extent before entering purification device, thereby ensuring denitration efficiency. The design of the ozone distributor is adjusted and optimized based on ammonia injection grid, so that besides the original advantages, such as high mixing uniformity, the ozone distributor has stronger adaptability. Patent CN103877837B and patent CN201410059167.5 discloses a flue ozone distributor used in low-temperature oxidation and denitration technology and its arrangement in the flue respectively. The ozone distributor is simple in structure, is easy in assemble and disassemble, and is easy in clean. Moreover, the ozone distributor enables ozone to be distributed uniformly on cross section of the flue, and has been applied in engineering practice.

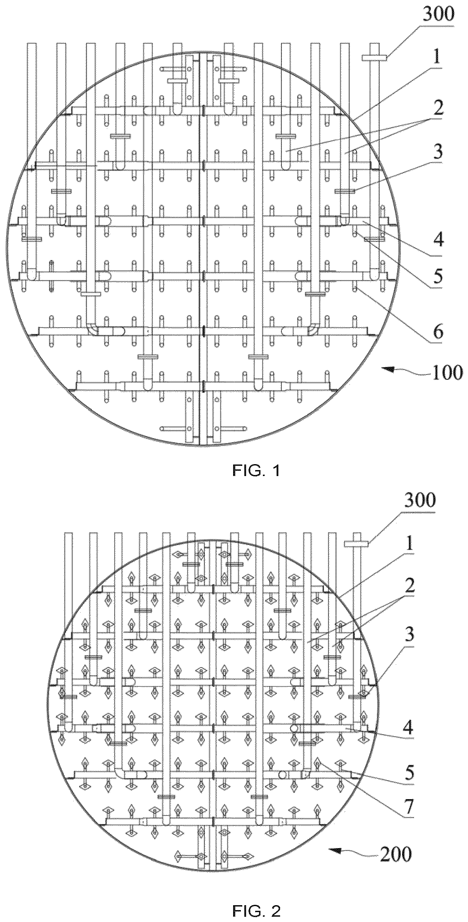

As shown in FIGS. 1 to 4, embodiments provide a combined flue ozone distribution system. The combined flue ozone distribution system includes a first ozone distributor 100 and a second ozone distributor 200 disposed in a flue 1. The first ozone distributor 100 and the second ozone distributor 200 each includes a plurality of main distribution pipes 4. Two sides of each main distribution pipe 4 are each provided with a branch distribution pipe 5. The first end of one main distribution pipe 4 communicates with a connecting pipe 2 for supplying ozone, and the second end of the one main distribution pipe 4 communicates with a branch distribution pipe 5. The end of the branch distribution pipe 5 of the first ozone distributor 100 is provided with one hemispherical distributor 6. The end of the branch distribution pipe 5 of the second ozone distributor 200 is provided with one rhombic guide plate 7.

The combined flue ozone distribution system according to the embodiments using a first ozone distributor 100 and a second ozone distributor 200 which are disposed in the flue 1. The first ozone distributor 100 and the second ozone distributor 200 are perpendicular to the flow direction of flue gas. The first ozone distributor 100 and the second ozone distributor 200 are disposed in order following the flow direction of the flue gas. The first ozone distributor 100 is configured to inject and disperse ozone and uses a structural form in which multiple branch distribution pipes 5 and multiple hemispherical distributors 6 are disposed in the same plane. In engineering application, the coverage and uniformity of ozone on the section of the flue 1 are ensured by adopting this structure. The second ozone distributor 200 is configured to inject ozone again and increase the disturbance of the mixture of ozone and flue gas. Similarly, the second ozone distributor 200 uses a structural form in which multiple branch distribution pipes 5 and multiple rhombic guide plates 7 are disposed in the same plane. In engineering application, this structure ensures the coverage of ozone on the section of the flue 1, and the rhombic guide plate 7 is arranged perpendicular to the axis of one branch distribution pipe 5 so as to enhance the disturbance of flue gas and ozone, improve the mixing effect of mixture gas on the horizontal section, shorten the time of ozone mixing in flue gas, and increase the effective utilization of ozone, thereby increasing the oxidation rate of NO.

In an embodiment, the specific form and size of each component can be selected according to the actual need. The distance between main distribution pipes, between branch distribution pipes and between the first ozone distributor 100 and the second ozone distributor 200 can be selected according to the actual need. In the embodiment, the materials of the components of the combined flue ozone distributors can be determined according to the environmental condition in practical application.

In an embodiment, the second ozone distributor 200 is installed behind the first ozone distributor 100 along the flow direction of flue gas, and the distance between the second ozone distributor 200 and the first ozone distributor 100 is 700 mm to 1000 mm. In addition, the distance between the second ozone distributor 200 and the first ozone distributor 100 can be determined according to the environmental conditions of the installation site, for example, 820 mm to 830 mm, 900 mm to 910.5 mm, or 960 mm to 968 mm may be selected. In an embodiment, the distance between the second ozone distributor 200 and the first ozone distributor 100 is 850 mm to 950 mm.

In the first ozone distributor 100 or the second ozone distributor 200, the connecting pipe 2 is provided with a flow regulating valve 300 with strong adaptability which can adjust ozone intake quantity according to the NO concentration in flue gas. The connecting pipe 2 communicates with the main distribution pipe 4 to ensure that the ozone enters the subsequent gas path smoothly.

The connecting pipe 2 communicates with the main distribution pipe 4 through the flange 3, and a plurality of flanges 3 are arranged in parallel in the same plane. The distance between two adjacent main distribution pipes 4 is 500 mm to 600 mm, for example, 510.3 mm to 525 mm, 528 mm to 560.5 mm, or 578 mm may be selected. In an embodiment, the distance between two adjacent main distribution pipes 4 is 510 mm to 560 mm.

In the first ozone distributor 100 or the second ozone distributor 200, on the same side of each main distribution pipe 4, the distance between two adjacent branch distribution pipes 5 is 230 mm to 330 mm, for example, 235.8 mm to 276.3 mm, 240 mm to 255 mm, or 280 mm may be selected. In an embodiment, in the first ozone distributor 100 or the second ozone distributor 200, on the same side of each main distribution pipe 4, the distance between two adjacent branch distribution pipes 5 is 260 mm to 310 mm.

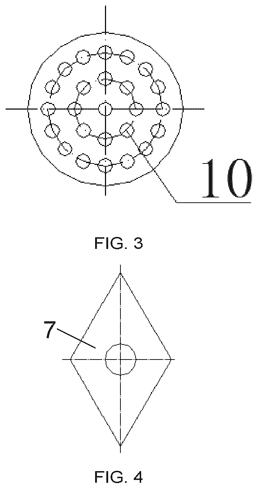

The axis of one branch distribution pipe 5 is perpendicular to the flow direction of flue gas. The inner surface of the hemispherical distributor 6 is provided with a plurality of vias 10. The diameter of one hemispherical distributor 6 is equal to the diameter of one branch distribution pipe 5. One branch distribution pipe 5 communicates with a plurality of vias 10 of one hemispherical distributor 6. The pore size of one via 10 is 37 mm to 39 mm, for example, 37.5 mm to 38.5 mm or 38.9 mm may be selected. The inner surface of one hemispherical distributor 6 is provided with three circles of vias 10. The flow rate of ozone in the vias 10 is 20 m/s to 25 m/s, for example, 20.5 m/s, 23.8 m/s, or 24.5 m/s. In an embodiment, the flow rate of ozone in the via 10 is 22 m/s to 24 m/s. In an embodiment, as shown in FIG. 3, the vias 10 are distributed in two circles on the inner surface of the hemispherical distributor 6, and one via 10 is disposed at the center of the inner surface of the hemispherical distributor 6.

In the second ozone distributor 200, one rhombic guide plate 7 is perpendicular to the axis of one branch distribution pipe 5, the long axes of each two adjacent rhombic guide plates 7 are perpendicular to each other, and the length of one side of one rhombic guide plate 7 is 60 mm to 100 mm, for example, 65.5 mm to 80 mm, 70 mm to 75.8 mm, or 80 mm. In an embodiment, the length of one side of one rhombic guide plate 7 is 75 mm to 85 mm. The gas velocity of one rhombic guide plate 7 is controlled to be 20 m/s to 25 m/s, for example, 20.2 m/s, 22.6 m/s, or 24.0 m/s may be selected. In an embodiment, the gas velocity of one rhombic guide plate 7 is 22 m/s to 24 m/s.

In the embodiments, the diameter of the main distribution pipe 4 and the diameter of the branch distribution pipe 5 are determined according to the gas velocity (that is, the flow rate of ozone).

The flue ozone distributors are applicable to the ozone low-temperature oxidation and denitration system in coal-fired power plants, steel and other industries. The installation, cleaning and maintenance of the flue ozone distributors are easy and convenient. The direction in which ozone is injected into the flue 1 is perpendicular to the flow direction of flue gas to avoid ash accumulation and blockage. In addition, ozone intake can be adjusted according to NO concentration in flue gas; thus, the flue ozone distributors have great advantages in engineering application with high flexibility and strong operability.

## Claims

1. A combined flue ozone distribution system, comprising a first ozone distributor (100) and a second ozone distributor (200) that are disposed in a flue (1),
wherein the first ozone distributor (100) and the second ozone distributor (200) each comprises:
a plurality of main distribution pipes (4), a plurality of branch distribution pipes (5), and
connecting pipes (2) configured to supply ozone, wherein both sides of each of the plurality of main distribution pipes (4) are each provided with a branch distribution pipe (5), a first end of one of the plurality of main distribution pipes (4) is communicated with a connecting pipe (2), and a second end of the one of the plurality of main distribution pipes (4) is communicated with a branch distribution pipe (5),
**characterized in that**
the first ozone distributor (100) further comprises hemispherical distributors (6), and one of the hemispherical distributors (6) is disposed at an end of the one of the plurality of branch distribution pipes (5) of the first ozone distributor (100); the second ozone distributor (200) further comprises rhombic guide plates (7), and one of the rhombic guide plates (7) is disposed at an end of the one of the plurality of branch distribution pipes (5) of the second ozone distributor (200).

2. The combined flue ozone distribution system of claim 1, wherein the first ozone distributor (100) and the second ozone distributor (200) are arranged perpendicular to a flow direction of flue gas, and the first ozone distributor (100) and the second ozone distributor (200) are distributed in sequence along the flow direction of the flue gas.

3. The combined flue ozone distribution system of claim 1, wherein an axis of the one of the plurality of branch distribution pipes (5) is perpendicular to a flow direction of flue gas, and an inner surface of the one of the hemispherical distributors (6) is provided with a plurality of vias (10).

4. The combined flue ozone distribution system of claim 3, wherein in the first ozone distributor (100), a diameter of the one of the hemispherical distributors (6) is equal to a diameter of the one of the plurality of branch distribution pipes (5), and the one of the plurality of branch distribution pipes (5) is communicated with the plurality of vias (10) of the one of the hemispherical distributors (6).

5. The combined flue ozone distribution system of claim 4, wherein the plurality of vias (10) of the one of hemispherical distributors (6) are arranged in three circles on the inner surface of the one of hemispherical distributors (6), and the system is configured such that a flow rate of ozone in the plurality of vias (10) is within a range from 20 m/s to 25 m/s.

6. The combined flue ozone distribution system of claim 1, wherein in the second ozone distributor (200), the one of the rhombic guide plates (7) is perpendicular to an axis of the one of the plurality of branch distribution pipes (5), long axes of each two adjacent ones of the rhombic guide plates (7) are perpendicular to each other, and a length of one side of the one of the rhombic guide plates (7) is within a range from 60 mm to 100 mm.

7. The combined flue ozone distribution system of claim 1, wherein a distance between the first ozone distributor (100) and the second ozone distributor (200) is within in a range from 700 mm to 1000 mm.

8. The combined flue ozone distribution system of claim 1, wherein the first ozone distributor (100) or the second ozone distributor (200) comprises a flow regulating valve (300) and flanges (3), the connecting pipes (2) in the first ozone distributor (100) or the second ozone distributor (200) are respectively provided with the flow regulating valve (300), and one of the connecting pipe (2) in the first ozone distributor (100) or the second ozone distributor (200) is communicated with the one of the plurality of main distribution pipe (4) through one of the flanges (3).

9. The combined flue ozone distribution system of claim 1, wherein a distance between each two adjacent ones of the plurality of main distribution pipes (4) in the first ozone distributor (100) or the second ozone distributor (200) is within a range from 500 mm to 600 mm.

10. The combined flue ozone distribution system of claim 1, wherein in the first ozone distributor (100) or the second ozone distributor (200), a distance between two adjacent ones of the plurality of branch distribution pipes (5) on a same side of the one of the plurality of main distribution pipes (4) is within a range from 230 mm to 330 mm.

## Patentansprüche

1. Kombiniertes Rauchgas-Ozon-Verteilungssystem, mit einem ersten Ozonverteiler (100) und einem zweiten Ozonverteiler (200), die in einem Rauchabzug (1) angeordnet sind,
wobei der erste Ozonverteiler (100) und der zweite Ozonverteiler (200) jeweils Folgendes umfassen:
mehrere Hauptverteilungsrohre (4), mehrere Abzweigverteilungsrohre (5) und Verbindungsrohre (2), die zur Zuführung von Ozon eingerichtet sind, wobei beide Seiten jedes der mehreren Hauptverteilungsrohre (4) jeweils mit einem Abzweigverteilungsrohr (5) versehen sind, ein erstes Ende eines der mehreren Hauptverteilungsrohre (4) mit einem Verbindungsrohr (2) in Verbindung steht und ein zweites Ende des einen der mehreren Hauptverteilungsrohre (4) mit einem Abzweigverteilungsrohr (5) in Verbindung steht,
**dadurch gekennzeichnet, dass** der erste Ozonverteiler (100) ferner halbkugelförmige Verteiler (6) umfasst und einer der halbkugelförmigen Verteiler (6) an einem Ende des einen der mehreren Abzweigverteilungsrohre (5) des ersten Ozonverteilers (100) angeordnet ist, der zweite Ozonverteiler (200) ferner rautenförmige Führungsplatten (7) umfasst und eine der rautenförmigen Führungsplatten (7) an einem Ende des einen der mehreren Abzweigverteilungsrohre (5) des zweiten Ozonverteilers (200) angeordnet ist.

2. Kombiniertes Rauchgas-Ozon-Verteilungssystem nach Anspruch 1, bei dem der erste Ozonverteiler (100) und der zweite Ozonverteiler (200) senkrecht zu einer Strömungsrichtung des Rauchgases angeordnet sind und der erste Ozonverteiler (100) und der zweite Ozonverteiler (200) nacheinander entlang der Strömungsrichtung des Rauchgases verteilt sind.

3. Kombiniertes Rauchgas-Ozon-Verteilungssystem nach Anspruch 1, bei dem eine Achse des einen der mehreren Abzweigverteilungsrohre (5) senkrecht zu einer Strömungsrichtung des Rauchgases ist und eine Innenfläche des einen der halbkugelförmigen Verteiler (6) mit mehreren Durchgangslöchern (10) versehen ist.

4. Kombiniertes Rauchgas-Ozon-Verteilungssystem nach Anspruch 3, bei dem beim ersten Ozonverteiler (100) ein Durchmesser des einen der halbkugelförmigen Verteiler (6) gleich einem Durchmesser des einen der mehreren Abzweigverteilungsrohre (5) ist und das eine der mehreren Abzweigverteilungsrohre (5) mit den mehreren Durchgangslöchern (10) des einen der halbkugelförmigen Verteiler (6) in Verbindung steht.

5. Kombiniertes Rauchgas-Ozon-Verteilungssystem nach Anspruch 4, bei dem die mehreren Durchgangslöcher (10) des einen der halbkugelförmigen Verteiler (6) in drei Kreisen an der Innenfläche des einen der halbkugelförmigen Verteiler (6) angeordnet sind und das System so eingerichtet ist, dass eine Strömungsgeschwindigkeit des Ozons in den mehreren Durchgangslöchern (10) in einem Bereich von 20 m/s bis 25 m/s liegt.

6. Kombiniertes Rauchgas-Ozon-Verteilungssystem nach Anspruch 1, bei dem beim zweiten Ozonverteiler (200) die eine der rautenförmigen Führungsplatten (7) senkrecht zu einer Achse des einen der mehreren Abzweigverteilungsrohre (5) ist, Längsachsen jeweils zweier benachbarter der rautenförmigen Führungsplatten (7) senkrecht zueinander sind und eine Länge einer Seite der einen der rautenförmigen Führungsplatten (7) in einem Bereich von 60 mm bis 100 mm liegt.

7. Kombiniertes Rauchgas-Ozon-Verteilungssystem nach Anspruch 1, bei dem ein Abstand zwischen dem ersten Ozonverteiler (100) und dem zweiten Ozonverteiler (200) in einem Bereich von 700 mm bis 1000 mm liegt.

8. Kombiniertes Rauchgas-Ozon-Verteilungssystem nach Anspruch 1, bei dem der erste Ozonverteiler (100) oder der zweite Ozonverteiler (200) ein Durchflussregelventil (300) sowie Flansche (3) umfasst, die Verbindungsrohre (2) in dem ersten Ozonverteiler (100) bzw. dem zweiten Ozonverteiler (200) jeweils mit dem Durchflussregelventil (300) versehen sind und eines der Verbindungsrohre (2) in dem ersten Ozonverteiler (100) oder dem zweiten Ozonverteiler (200) über einen der Flansche (3) mit dem einen der mehreren Hauptverteilungsrohre (4) in Verbindung steht.

9. Kombiniertes Rauchgas-Ozon-Verteilungssystem nach Anspruch 1, bei dem ein Abstand zwischen jeweils zwei benachbarten der mehreren Hauptverteilungsrohre (4) in dem ersten Ozonverteiler (100) oder dem zweiten Ozonverteiler (200) in einem Bereich von 500 mm bis 600 mm liegt.

10. Kombiniertes Rauchgas-Ozon-Verteilungssystem nach Anspruch 1, bei dem beim ersten Ozonverteiler (100) oder beim zweiten Ozonverteiler (200) ein Abstand zwischen zwei benachbarten der mehreren Abzweigverteilungsrohre (5) auf einer selben Seite des einen der mehreren Hauptverteilungsrohre (4) in einem Bereich von 230 mm bis 330 mm liegt.

## Revendications

1. Système de distribution de gaz de fumée et d'ozone combiné, comprenant un premier distributeur d'ozone (100) et un deuxième distributeur d'ozone (200) agencés dans un carneau (1),
le premier distributeur d'ozone (100) et le deuxième distributeur d'ozone (200) comprenant chacun :
une pluralité de conduits de distribution principaux (4), une pluralité de conduits de distribution de dérivation (5) et des conduits de raccordement (2) réalisés pour l'alimentation en ozone, les deux côtés de chacun des plusieurs conduits de distribution principaux (4) étant respectivement pourvus d'un conduit de distribution de dérivation (5), une première extrémité de l'un des plusieurs conduits de distribution principaux (4) étant en communication avec un conduit de raccordement (2), et une deuxième extrémité de l'un des plusieurs conduits de distribution principaux (4) étant en communication avec un conduit de distribution de dérivation (5),
**caractérisé en ce que** le premier distributeur d'ozone (100) comprend en outre des distributeurs hémisphériques (6) et l'un des distributeurs hémisphériques (6) est agencé à une extrémité dudit un des plusieurs conduits de distribution de dérivation (5) du premier distributeur d'ozone (100) ; **en ce que** le deuxième distributeur d'ozone (200) comprend en outre des plaques de guidage rhombiques (7) et l'une des plaques de guidage rhombiques (7) est agencée à une extrémité dudit un des plusieurs conduits de distribution de dérivation (5) du deuxième distributeur d'ozone (200).

2. Système de distribution de gaz de fumée et d'ozone combiné selon la revendication 1, dans lequel le premier distributeur d'ozone (100) et le deuxième distributeur d'ozone (200) sont agencés perpendiculairement à un sens d'écoulement du gaz de fumée et le premier distributeur d'ozone (100) et le deuxième distributeur d'ozone (200) sont répartis l'un après l'autre le long du sens d'écoulement du gaz de fumée.

3. Système de distribution de gaz de fumée et d'ozone combiné selon la revendication 1, dans lequel un axe dudit un des plusieurs conduits de distribution de dérivation (5) est perpendiculaire à un sens d'écoulement du gaz de fumée, et une surface intérieure dudit un des distributeurs hémisphériques (6) est pourvue d'une pluralité de trous de passage (10).

4. Système de distribution de gaz de fumée et d'ozone combiné selon la revendication 3, dans lequel dans le premier distributeur d'ozone (100), un diamètre dudit un des distributeurs hémisphériques (6) est égal à un diamètre dudit un des plusieurs conduits de distribution de dérivation (5), et ledit un des plusieurs conduits de distribution de dérivation (5) est en communication avec les plusieurs trous de passage (10) dudit un des distributeurs hémisphériques (6).

5. Système de distribution de gaz de fumée et d'ozone combiné selon la revendication 4, dans lequel les plusieurs trous de passage (10) dudit un des distributeurs hémisphériques (6) sont agencés selon trois cercles sur la surface intérieure dudit un des distributeurs hémisphériques (6), et le système est réalisé de sorte qu'une vitesse d'écoulement d'ozone dans la pluralité de trous de passage (10) est dans une plage de 20 m/s à 25 m/s.

6. Système de distribution de gaz de fumée et d'ozone combiné selon la revendication 1, dans lequel dans le deuxième distributeur d'ozone (200), ladite une des plaques de guidage rhombiques (7) est perpendiculaire à un axe dudit un des plusieurs conduits de distribution de dérivation (5), des axes longitudinaux de deux plaques respectivement adjacentes parmi les plaques de guidage rhombiques (7) sont perpendiculaires l'un à l'autre, et une longueur d'un côté de ladite une des plaques de guidage rhombiques (7) est dans une plage de 60 mm à 100 mm.

7. Système de distribution de gaz de fumée et d'ozone combiné selon la revendication 1, dans lequel une distance entre le premier distributeur d'ozone (100) et le deuxième distributeur d'ozone (200) est dans une plage de 700 mm à 1000 mm.

8. Système de distribution de gaz de fumée et d'ozone combiné selon la revendication 1, dans lequel le premier distributeur d'ozone (100) ou le deuxième distributeur d'ozone (200) comprend une valve de régulation d'écoulement (300) et des brides (3), les conduits de raccordement (2) dans le premier distributeur d'ozone (100) ou le deuxième distributeur d'ozone (200) sont chacun pourvus de la valve de régulation d'écoulement (300), et l'un des conduits de raccordement (2) dans le premier distributeur d'ozone (100) ou dans le deuxième distributeur d'ozone (200) est en communication avec ledit un des plusieurs conduits de distribution principaux (4) par l'intermédiaire de l'une des brides (3).

9. Système de distribution de gaz de fumée et d'ozone combiné selon la revendication 1, dans lequel une distance entre deux conduits respectivement adjacents parmi les plusieurs conduits de distribution principaux (4) dans le premier distributeur d'ozone (100) ou le deuxième distributeur d'ozone (200) est dans une plage de 500 mm à 600 mm.

10. Système de distribution de gaz de fumée et d'ozone combiné selon la revendication 1, dans lequel dans le premier distributeur d'ozone (100) ou le deuxième distributeur d'ozone (200), une distance entre deux conduits adjacents parmi les plusieurs conduits de distribution de dérivation (5) d'un même côté de dudit un des plusieurs conduits de distribution principaux (4) est dans une plage de 230 mm à 330 mm.
